# FASCICULE DE BREVET EUROPEEN

(11) **EP 1 838 541 B1**
(45) Date de publication et mention de la délivrance du brevet: **19.08.2009**
(21) Numéro de dépôt: 06709101.7
(22) Date de dépôt: 16.01.2006
(51) Int. Cl.: B60H 1/34

(54) **BUSE D'AERATION POUR VEHICULE AUTOMOBILE DESTINEE A ETRE PLACEE EN SORTIE D'UN CONDUIT D'AERATION DEBOUCHANT DANS L'HABITACLE DU VEHICULE, ET VEHICULE CORRESPONDANT**
LUFTDÜSE FÜR EIN KRAFTFAHRZEUG ZUR MONTAGE AM AUSGANG EINES IN DEN INSASSENRAUM DES FAHRZEUGES FÜHRENDEN ENTLÜFTUNGSROHRES UND ENTSPRECHENDES FAHRZEUG
AIR NOZZLE FOR A MOTOR VEHICLE, TO BE PLACED AT THE OUTLET OF A VENT PIPE INTO THE PASSENGER COMPARTMENT OF THE VEHICLE, AND CORRESPONDING VEHICLE

(30) Priorité: 21.01.2005 FR 0500680
(43) Date de publication de la demande: 03.10.2007
(73) Titulaire: PEUGEOT CITROËN AUTOMOBILES S.A., 78140 Vélizy Villacoublay (FR); Key Plastics International, 61130 Bellême (FR)
(72) Inventeur: BARRE, Philippe, F-94340 Joinville Le Pont (FR); PINTAT, Bruno, F-92190 Meudon (FR); AVANZINI, Philippe, F-61130 Belleme (FR); DAVRIL, Jean-louis, F-61400 Mortagne Au Perche (FR); GAUDRY, Pascal, F-17780 St Nazaire Sur Charente (FR)
(86) Numéro de dépôt international: PCT/FR2006/000094
(87) Numéro de publication internationale: WO 2006/077308

(56) Documents cités:
- EP-A- 1 375 217
- DE-A1- 10 223 660
- DE-A1- 19 943 822
- DE-U1-9202004 004 22
- US-B1- 6 176 775

## Description

La présente invention concerne une buse d'aération pour véhicule automobile destinée à être placée en sortie d'un conduit d'aération débouchant dans l'habitacle du véhicule, du type comprenant un passage pour l'écoulement de l'air entre le conduit et l'habitacle, au moins une ailette montée mobile à rotation dans le passage entre une pluralité de positions pour modifier l'écoulement d'air dans le passage, et des moyens de commande de la position de l'ailette comprenant un organe de commande.

Les véhicules automobiles sont généralement munis de systèmes d'aération comprenant des moyens d'admission d'air, des moyens de traitement de l'air admis par chauffage et/ou refroidissement, et des moyens pour pulser de l'air dans l'habitacle du véhicule automobile. Les moyens pour pulser de l'air comprennent généralement des conduites débouchant dans l'habitacle par des buses de sortie.

Le document FR 2 794 690 décrit une buse du type précité, comprenant une quatre allettes dont l'orientation est commandée par l'intermédiaire d'une roue dentée coopérant avec des portions dentées des ailettes. Cependant, la buse munie de tels moyens de commande est difficile à fabriquer.

EP 1 375 217 décrit une buse d'aération comprenant un organe de manoeuvre manuelle couplé à un disque de came pour la commande de l'orientation d'ailettes

Un but de l'invention est de proposer une buse d'aération de construction simplifiée.

A cet effet, l'invention propose une buse d'aération selon la revendication 1.

D'autres modes de réalisation sont définis dans les revendications 2 à 12.

L'invention concerne également un véhicule automobile comprenant un système d'aération muni d'une buse d'aération telle que définie ci-dessus.

L'invention et ses avantages seront mieux compris à l'étude de la description détalllée qui va suivre, donnée uniquement à titre d'exemple, et faite en se référant aux dessins annexés, sur lesquels :
- la figure 1 est une vue en perspective éclatée d'une buse d'aération conforme à l'invention comprenant un support d'allettes délimitant un passage d'alr, une pluralité d'allettes situées à l'avant du support d'ailettes, et des volets situés à l'arrière du support d'allettés ;
- la figure 2 est une vue analogue à la figure 1 sur laquelle la buse d'aération est en partie assemblée ;
- la figure 3 est une vue de dessus partielle de la buse d'aération en partie assemblée de la figure 2, dont une région est représentée en arraché ;
- la figure 4 est une vue en perspective partielle de la buse d'aération de la figure 1 représentant le support d'ailettes et une ailette ;
- les figures 5A et 5B sont respectivement des vues de face et de côté de la buse en position fermée des ailettes et en position fermée de volets d'obturation ;
- les figurés 6A et 6B sont analogues aux figures 5A et 5B et illustrent la buse d'aération en position fermée des ailettes et en position ouverte des volets d'obturation;
- les figures 7A et 7B sont analogues aux figures 5A et 5B et illustrent la buse d'aération en position partiellement ouverte des ailettes et en position ouverte des volets ; et
- les figures 8A et 8B sont analogues aux figures 5A et 5B et illustrent la buse d'aération en position complètement ouverte des ailettes et en position ouverte des volets.

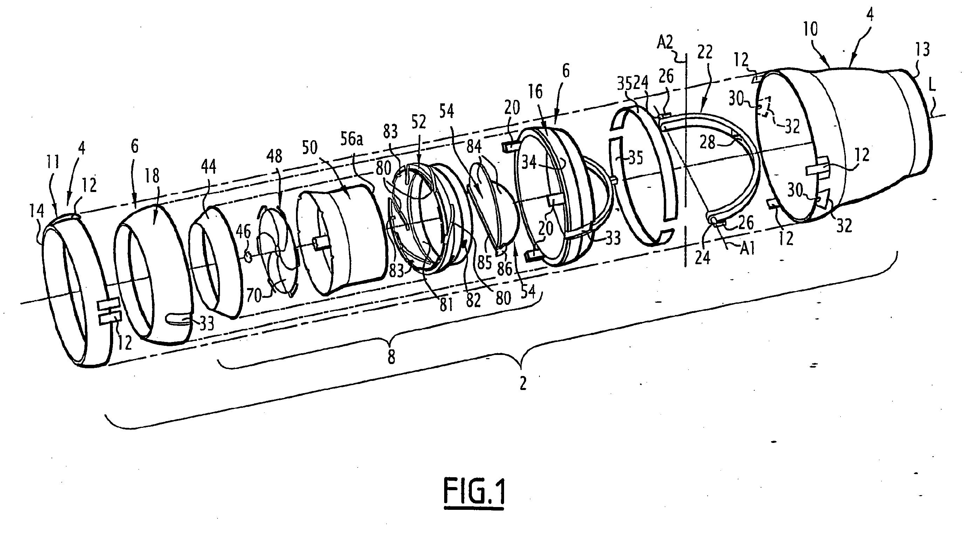

Sur la figure 1, une buse d'aération 2 conforme à l'invention est destinée à être disposée en sortie d'un conduit (non représenté) d'amenée d'un flux d'air chauffé ou refroidi dans un habitacle d'un véhicule automobile.

La buse 2 comprend un boîtier externe 4 destiné à recevoir intérieurement un boîtier interne 6 lui-même destiné à recevoir intérieurement un ensemble 8 de commande du flux d'air à travers la buse 2.

Dans la suite de la description, le terme « arrière » désigne le côté de la buse 2 destiné à être raccordé au conduit, et le terme « avant » désigne le côté opposé.

Le boîtier externe 4 est tubulaire et s'étend suivant un axe principal L. Il comprend un corps tubulaire 10 et une coiffe annulaire 11 destinés à être fixés l'un à l'extrémité de l'autre à l'aide de moyens de fixation complémentaires 12. Une ouverture arrière 13 du corps 10 est destinée à être raccordée au conduit et une ouverture avant 14 de la coiffe 11 est prévue pour déboucher dans l'habitacle.

Le boîtier interne 6 comprend une partie arrière annulaire 16 et une partie avant annulaire 18 destinées à être fixées l'une sur l'autre à l'aide de moyens de fixation 20, seuls les moyens de fixation de la partie arrière 16 étant visibles.

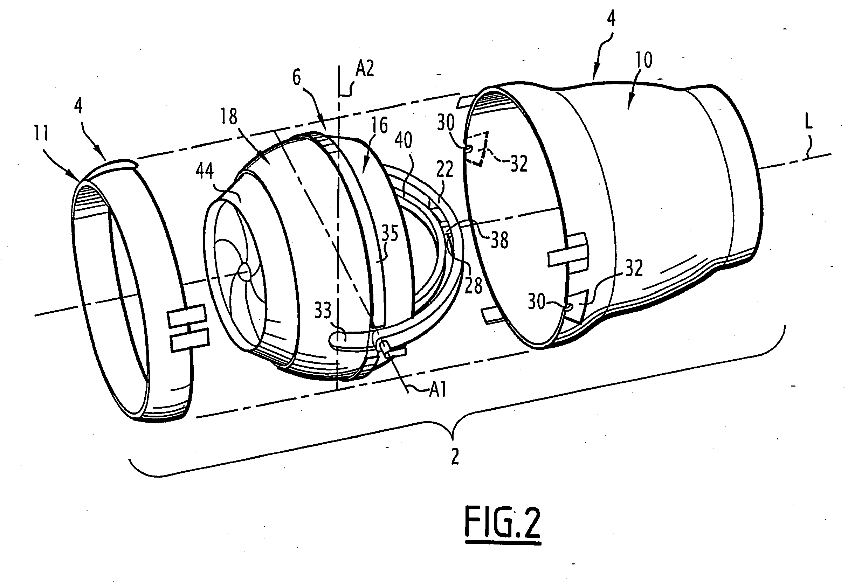

Les parties arrière 16 et avant 18 présentent chacune une forme générale de couronne sphérique délimitée par deux plans parallèles de sorte que lorsqu'elles sont réunies, le boîtier interne 6 est tubulaire et ouvert à l'avant et à l'arrière, et présente lui-même sensiblement une forme de couronne sphérique annulaire traversée par un plan équatorial et délimitée par deux plans parallèles au plan équatorial, comme cela est visible sur la figure 2.

Le boîtier interne 6 est reçu dans le boîtier externe 4 en étant mobile en rotation autour de deux axes A1 et A2 perpendiculaires entre eux et à l'axe principal L.

A cet effet, le boîtier interne 6 est fixé à l'intérieur du boîtier externe 4 par l'intermédiaire d'un support 22 formant palier.

En revenant à la figure 1, le support 22 présente une forme générale en C. Les extrémités libres du support 22 sont munies de tourillons 24 alignés suivant l'axe A1 et s'étendant vers l'extérieur du support 22.

Chaque tourillon 24 comprend à son extrémité opposée au support 22 une butée 26 s'étendant transversalement au tourillon 24. Le support 22 comprend dans sa partie médiane une fente 28 à contour fermé s'étendant à travers la matière du support 22 dans le plan défini par celui-ci. La fente 28 est ménagée à distance des extrémités libres du support 22 et présente un profil allongé dans la direction circonférentielle du support 22.

Le corps 10 présente sur son bord avant des encoches 30 formant palier destinées à recevoir les tourillons 24. Les encoches 30 sont refermées par la coiffe 11 lorsque celle-ci est fixée sur le corps 10.

Le corps 10 est muni sur sa surface extérieure, autour des encoches 30, de dégagements 32 destinés à recevoir les butées 26. Les butées 26 coopèrent en fonctionnement avec les dégagements 32 pour limiter le déplacement angulaire du support en C 22 autour de l'axe A1.

Les parties arrière 16 et avant 18 du boîtier interne 6 sont munies sur leurs surfaces extérieures de rainures aptes à former, lorsque les parties 16, 18 sont réunies, deux gorges 33 de guidage en rotation diamétralement opposées s'étendant sur la surface extérieure du boîtier interne 6, comme illustré sur la figure 2 où une seule des gorges 33 est visible. Les gorges 33 s'étendent sur le boîtier interne 6 suivant des faisceaux parallèles à l'axe de symétrie des parties 16, 18.

Sur la figure 1, la partie arrière 16 comprend une gorge 34 annulaire située dans un plan équatorial et destinée à recevoir un joint 35 pour assurer une étanchéité à l'air entre la surface extérieure du boîtier interne 6 et la surface intérieure du boîtier externe 4. Le joint 35 est en deux parties et s'interrompt au niveau des gorges 33 de guidage en rotation.

Comme illustré sur la figure 2, les extrémités du support en C 22 sont reçues dans les gorges 33 de, guidage en rotation et coopèrent avec celles-ci pour guider le boîtier interne 6 en rotation par rapport au support en C 22 autour de l'axe A2.

Le débattement angulaire du boîtier interne 6 autour de l'axe A2 est limité par une butée 38 solidaire du boîtier interne 6 et engagée dans la fente 28 du support en C 22.

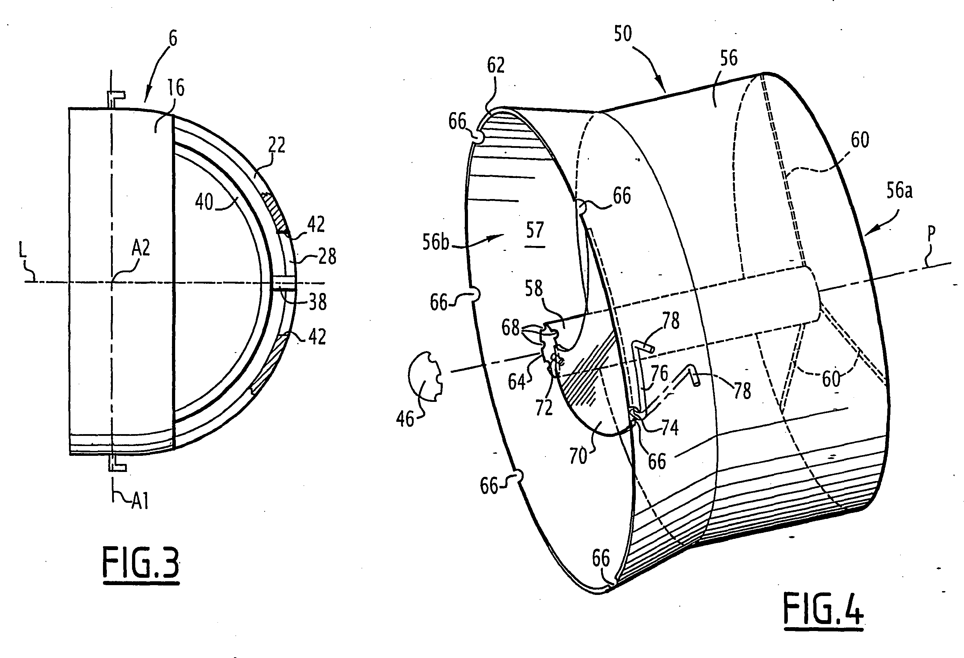

Plus précisément, et comme on peut mieux le voir sur la figure 3, la partie arrière 16 du boîtier interne 6 est munie à son extrémité arrière d'un arceau sensiblement en demi cercle 40 s'étendant entre deux bords diamétralement opposés de la partie arrière 16 et portant sensiblement en son milieu la butée 38.

Lors de la rotation de la partie arrière 16 par rapport au support en C 22, la butée 38 se déplace dans la fente 28, le déplacement étant limité par les parois 42 de la fente 28 délimitant circonférentiellement celle-ci.

En revenant à la figure 1, l'ensemble 8 comprend successivement de l'avant vers l'arrière une bague d'entraînement 44, un capuchon 46, un ensemble d'ailettes 48, un support d'ailettes 50, une came 52 et des volets 54.

En se référant à la figure 4, le support d'ailettes 50 comprend un support externe 56 tubulaire s'étendant suivant un axe P et délimitant intérieurement un passage 57 qui est le passage d'air de la buse 2, et un support interne 58 s'étendant axialement à l'intérieur du support externe 56 suivant l'axe P.

Le support externe 56 présente une ouverture arrière 56a destinée à être en communication avec le conduit d'air et une ouverture avant 56b destinée à déboucher dans l'habitacle.

Le support interne 58 est fixé sur le support externe 56 par l'intermédiaire de trois bras radiaux 60 s'étendant entre les extrémités arrière des supports 56, 58.

Un bord avant 62 du support externe 56 et un bord avant 64 du support interne 58 sont chacun munis d'une pluralité d'encoches respectivement externes 66 et internes 68.

Chaque encoche externe 66 est alignée suivant un axe radial perpendiculaire à l'axe P avec une encoche interne 68 correspondante. Le support 50 comprend six paires d'encoches 66, 68 réparties régulièrement autour de l'axe P.

L'ensemble d'ailettes 48 (figure 1) comprend plusieurs ailettes, par exemple six, identiques régulièrement réparties angulairement autour de l'axe P, chaque ailette étant montée à rotation sur le support 50 dans une paire d'encoches 66, 68 correspondantes. En variante, l'ensemble d'ailettes comprend un nombre d'ailettes différent, compris de préférence entre trois et dix.

Pour des raisons de clarté, seule une ailette 70 de l'ensemble 48 (figure 1) a été représentée sur la figure 4.

L'ailette 70 comprend un tourillon interne 72 reçu dans une encoche interne 68 et un tourillon externe 74 reçu dans l'encoche externe 66 correspondante. L'ailette 70 comprend un bras 76 en forme de manivelle prolongeant le tourillon externe 74 du côté opposé à l'ailette 70 et présentant à son extrémité opposée une portion recourbée radialement vers l'extérieur et formant suiveur de came 78.

Telle que représentée sur la figure 4, l'ailette 70 s'étend dans un plan radial. L'orientation de l'ailette 70 peut être modifiée de 90° en agissant sur le suiveur de came 78 pour déplacer le bras 76 comme illustré en pointillé sur la figure 4, et entraîner l'ailette 70 en rotation autour de l'axe radial défini par les encoches interne 68 et externe 66 jusqu'à placer l'ailette 70 dans un plan axial.

Le capuchon 46 est fixé sur l'extrémité avant du support interne 58 en fermant les encoches internes 68 pour assurer le maintien des tourillons internes 72. '

De façon analogue, la bague d'entraînement 44 (figure 1) peut être munie d'un rebord venant fermer les encoches externes 66. La bague d'entraînement 44 est néanmoins libre en rotation autour de l'axe P par rapport au support 50.

Comme cela est visible sur la figure 1, la came 52 est tubulaire et présente une pluralité de rainures de came 80, ici au nombre de six.

Les rainures 80 sont sensiblement parallèles et s'étendent en hélice dans la came 52 à partir du bord avant de celle-ci. Lors de l'assemblage, la came 52 est disposée autour du support 50 de façon que les suiveurs de came 78 (figure 4) soient reçus dans les rainures 80. La commande de la position des ailettes 70 à l'aide de la came 52 sera explicitée plus en détail par la suite.

La came 52 est munie d'une portée intérieure 81 destinée à venir en contact avec la surface extérieure du support 50 pour un guidage en rotation du support 50 relativement à la came 52.

La came 52 présente sur sa surface extérieure deux pistes dentées 82, une seule étant visible, diamétralement opposées et s'étendant circonférentiellement.

La came 52 est en fonctionnement liée en rotation autour de l'axe P (figure 4) à la bague d'entraînement 44, par exemple à l'aide d'encoches 83 ménagées sur un bord avant de la came 52 et coopérant avec des pions non visibles de la bague d'entraînement 44.

Les volets 54 sont destinés à être placés à l'arrière du support 50 pour sélectivement fermer ou ouvrir l'ouverture arrière 56a.

Chaque volet 54 se présente sous la forme d'un demi disque plein 84, muni le long de son bord rectiligne d'un bras 85 perpendiculaire à l'axe P (figure 4) et dont les extrémités sont destinées à être reçues à rotation autour de l'axe du bras 85 dans des logements correspondants (non visibles) ménagés dans la surface intérieure de la partie arrière 16. Chaque bras 85 comprend à une de ses extrémités une portion de roue dentée 86 destinée à coopérer avec une piste dentée 82.

Les volets 54 sont disposés de façon que chaque volet 54 en position fermée obture hermétiquement une moitié de l'ouverture arrière 56a.

Comme cela est visible sur la figure 2, la bague d'entraînement 44 fait saillie par l'ouverture avant du boîtier interne 6 pour permettre sa manipulation par un utilisateur. La bague 44 sert à orienter le boîtier interne 6 autour des axes A1 et A2 et à entraîner la came 52 en rotation autour de l'axe P (figure 4).

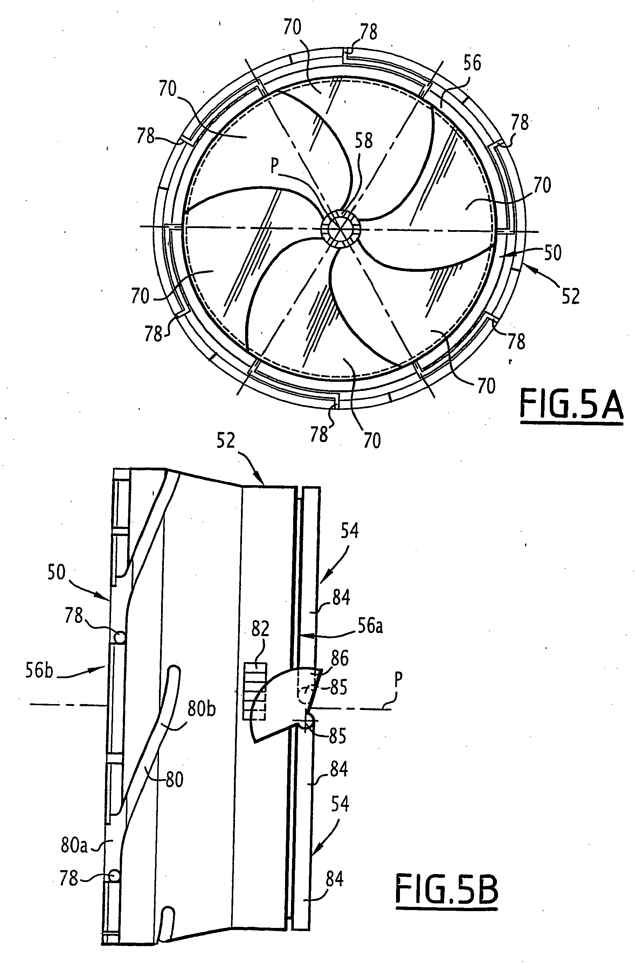

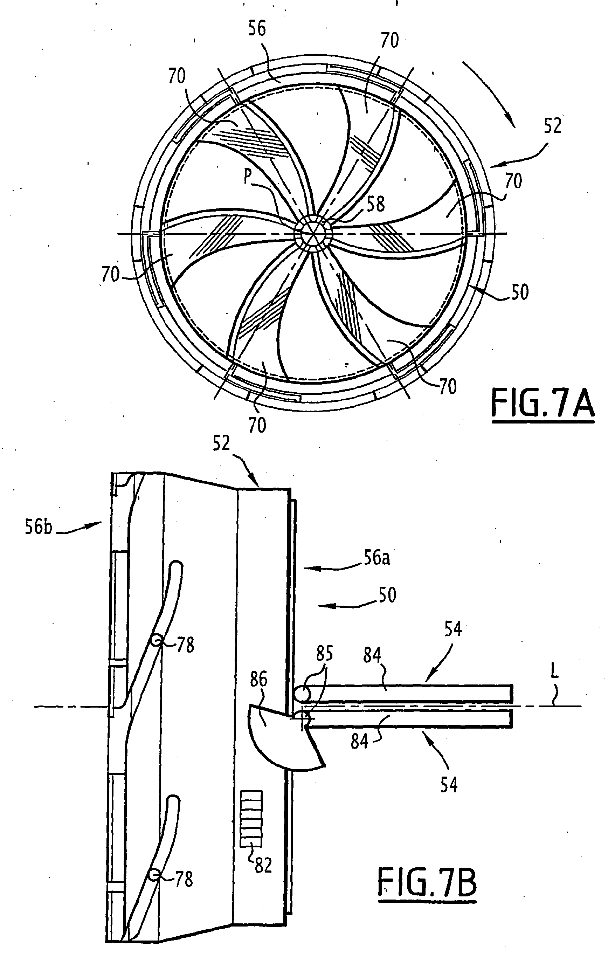

La commande de l'ouverture et de la fermeture des ailettes 70 et des volets 54 va maintenant être décrite en référence aux figures 5A à 8B sur lesquelles seuls le support d'ailettes 50, les ailettes 70, la came 52 et les volets 54 ont été représentés.

Comme cela est visible sur la figure 5A, chaque rainure 80 comprend une portion circonférentielle 80a s'étendant dans un plan radial le long du bord avant de la came 52, cette portion circonférentielle 80a étant prolongée par une portion inclinée 80b s'étendant obliquement sensiblement en hélice autour de l'axe P.

Dans la position des figures 5A et 5B, les suiveurs de came 78 des ailettes 70 sont reçus dans les portions circonférentielles 80a des rainures 80 en position extrême du côté opposé aux portions inclinées 80b.

Dans cette position, les ailettes 70 se situent dans des plans radiaux et ferment l'ouverture avant 56b du support 50 et par conséquent le passage de la buse. En outre, les volets 54 sont situés dans des plans radiaux et ferment l'ouverture arrière 56a du support 50. Les volets 54 assurent une étanchéité importante de la buse'2 fermée.

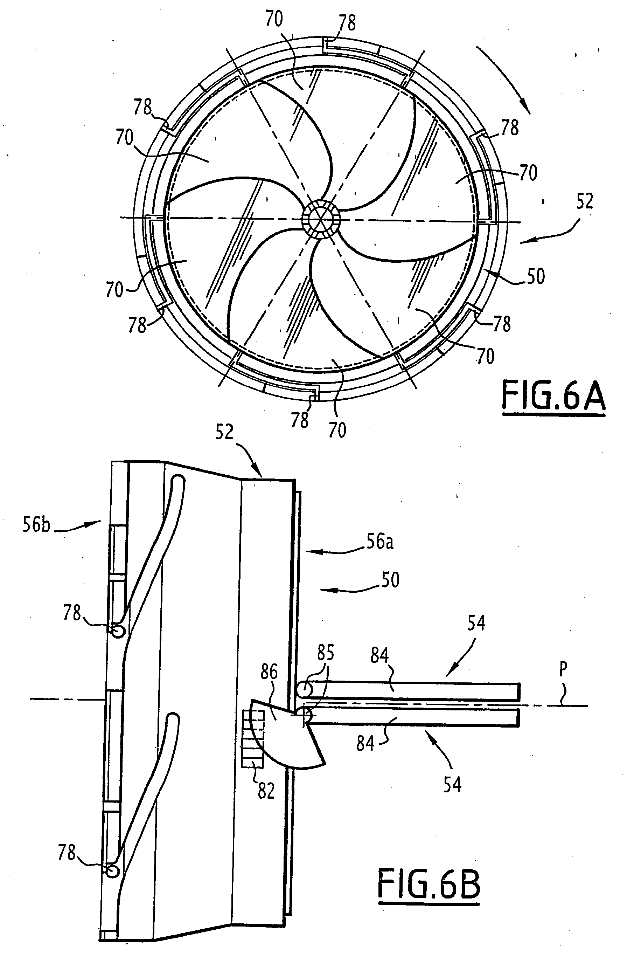

Comme illustré sur la figure 6A et 6B, lorsque la came 52 est entraînée en rotation autour de l'axe P sur une première course déterminée, les suiveurs de came 78 se déplacent dans les rainures 80 en restant dans les portions circonférentielles 80a. Il s'ensuit que la position des ailettes 70 reste inchangée.

En revanche, les pistes dentées 82 sont passées devant la portion de roue dentée 86 et ont coopéré avec celles-ci pour entraîner en rotation les volets 54 correspondant sur un quart de tour vers l'arrière autour de leurs arbres 85.

Par conséquent, dans cette position, les ailettes 70 sont en position fermée et les volets 54 sont en position ouverte.

Lorsque l'on fait pivoter la came 52 de façon à poursuivre sa rotation, les suiveurs de came 78 s'engagent dans les portions inclinées 80b des rainures 80. Les suiveurs de came 78 sont donc déplacés parallèlement à l'axe P. Il s'ensuit que chaque ailette 70 pivote autour de son axe de rotation radial. La buse 2 est ainsi partiellement ouverte.

La piste dentée 82 de la came 52 s'est déplacée sans entraîner de mouvement des volets 54 qui sont restés en position ouverte.

Dans cette position, les ailettes 70 dévient un flux d'air traversant la buse 2 suivant l'axe P en formant des jets d'air divergents radialement. Un tel écoulement de sortie permet de former un flux d'air diffus. Un passager ne ressentira pas un flux d'air orienté.

En fonction de la rotation de la came 52, les ailettes 70 pivotent plus ou moins et modifiant ainsi le pas des ailettes 70 et le caractère plus ou moins diffus de l'écoulement d'air en sortie de la buse 2.

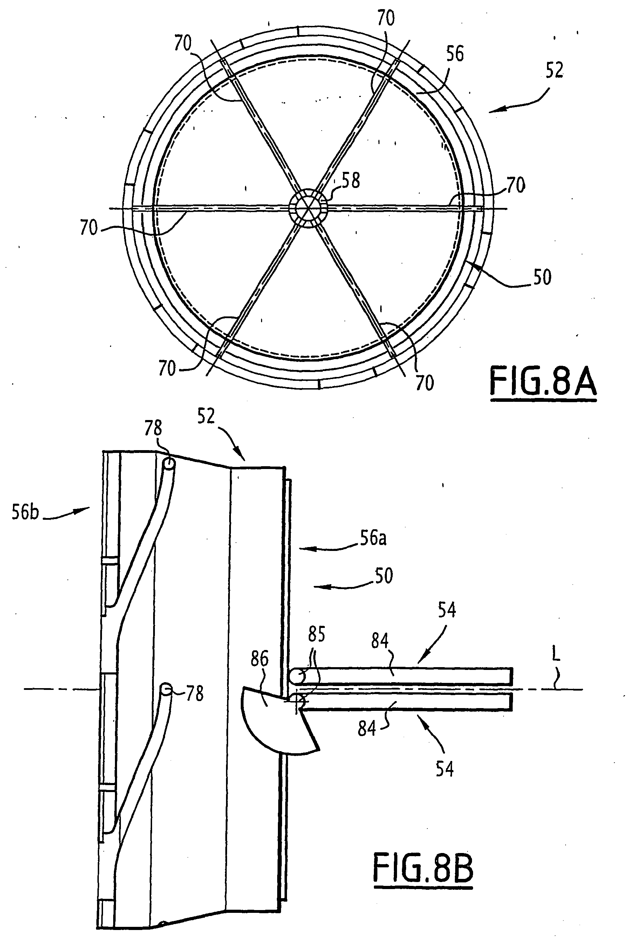

Comme représenté sur les figures 8A et 8B, lorsque le mouvement de rotation de la came 52 est poursuivi, les suiveurs de came 78 atteignent le fond des portions inclinées 80b. Dans cette position, les ailettes 70 ont pivoté autour de leur axe radial de 90° et se situent dans des plans axiaux, c'est-à-dire qu'elles sont parallèles à l'axe P et à un écoulement d'air à travers le passage de la buse 2. Par conséquent, les ailettes 70 ne modifient pas l'écoulement d'air à travers la buse. L'écoulement d'air en sortie de la buse 2 est donc orienté et il n'est pas diffus.

Les pistes dentées 82 se sont déplacées toujours sans coopérer avec les portions de roue 86 dentée et sans déplacer les volets 54.

Un mouvement inverse de la came 52 permet de ramener successivement les ailettes 70 et les volets 54 en position fermée. La came 52 est arrêtée en rotation en une position quelconque en fonction des souhaits de l'utilisateur.

La loi de mouvement entre l'orientation des ailettes 70 et la rotation de la came 52 est facilement adaptable en modifiant l'inclinaison des rainures de came 80, par exemple pour améliorer l'ergonomie.

La came 52 entourant le support d'ailettes 50 permet de préserver la compacité de la buse 2.

Une seule came 52 et un seul suiveur de came associé 78 permettent de déplacer chaque ailette 70 correspondante entre une première position extrême (figures 5A et 5B) et une deuxième position extrême (figures 8A et 8B).

Une seule bague d'entraînement 44 permet de commander à la fois l'orientation et l'ouverture de la buse 2, sans système de renvoi compliqué. La bague d'entraînement 44 permet en outre de commander par l'intermédiaire de la seule came 52 l'ouverture des volets 54 d'obturation complète de la buse et des ailettes 70 d'orientation du flux d'air.

La came 52 est agencée de façon qu'une première course entraîne l'actionnement des volets 54, et une deuxième course de la came 52 entraîne l'actionnement des ailettes 70.

Les première et deuxième courses sont disjointes de sorte que l'actionnement des volets 54 et des ailettes est séquentiel. En variante, la première course et la deuxième course de la came 52 se chevauchent de sorte que les ailettes 70 commencent à pivoter alors que les volets 54 ne sont pas complètement ouverts.

## Revendications

1. Buse d'aération pour véhicule automobile destinée à être placée en sortie d'un conduit d'aération débouchant dans l'habitacle du véhicule, du type comprenant un passage (57) pour l'écoulement de l'air entre le conduit et l'habitacle, une pluralité d'ailettes (70) montées mobiles dans le passage entre une pluralité de positions pour modifier l'écoulement d'air dans le passage (57), et des moyens de commande (52, 78) de la position des ailettes (70), comprenant un organe de commande (44), et une came (52) et des suiveurs de came (78) associés à la came (52), la came (52) étant couplée mécaniquement avec l'organe de commande (44), chaque suiveur de came (78) correspondant à une ailette (70) et étant couplé mécaniquement avec l'ailette (70) correspondante, **caractérisé en ce que** la came (52) est tubulaire et présente des rainures de came (80) s'étendant en hélice dans la came (52), les suiveurs de came (78) étant reçus dans les rainures de came (80) pour se déplacer dans celles-ci.

2. Buse selon la revendication 1, dans laquelle la ou chaque ailette est mobile entre deux positions extrêmes, et les moyens de commande comprennent une came (52) et un suiveur de came (78) associés uniques pour le déplacement de chaque ailette (70) entre les deux positions extrêmes.

3. Buse selon la revendication 1 ou 2, dans laquelle le passage s'étend suivant un axe (P) et la came (52) est montée mobile à rotation autour de l'axe (P) du passage (57).

4. Buse selon l'une quelconque des revendications précédentes, dans laquelle la came (52) entoure le passage (57).

5. Buse selon l'une quelconque des revendications précédentes, dans laquelle chaque suiveur de came (78) est solidaire de l'ailette (70) correspondante.

6. Buse selon la revendication 5, dans laquelle la ou chaque ailette (70) est mobile en rotation et comprend un tourillon (74) de guidage en rotation de l'ailette (70) et un bras (76) prolongeant le tourillon (74) transversalement à l'axe de rotation de l'ailette (70), le bras portant du côté opposé au tourillon (74) le suiveur de came (78) correspondant.

7. Buse selon l'une quelconque des revendications précédentes, comprenant au moins un volet (54) d'obturation du passage mobile entre une position ouverte permettant l'écoulement de fluide à travers le passage et une position fermée interdisant l'écoulement d'air à travers le passage, et des moyens de commande (82) du déplacement du volet (54) couplés à la came (52), de sorte qu'un déplacement déterminé de la came (52) provoque le déplacement du volet (54) entre sa position fermée et sa position ouverte.

8. Buse selon la revendication 7, dans laquelle les moyens de commande (82) du volet (54) sont agencés de façon que le déplacement de la came (52) sur une première course provoque le déplacement du volet (54) entre sa position ouverte et sa position fermée et le déplacement de la came (52) sur une deuxième course différente de la première course provoque le déplacement de chaque ailette (70).

9. Buse selon la revendication 8, dans laquelle la première course et la deuxième course sont disjointes.

10. Buse selon l'une quelconque des revendications précédentes, présentant un passage s'étendant suivant un axe (P), chaque ailette (70) étant montée mobile en rotation autour d'un axe radial du passage, les ailettes (70) étant réparties autour de l'axe (P) du passage de sorte que chaque ailette (70) s'étend dans un secteur angulaire du passage.

11. Buse selon l'une quelconque des revendications précédentes comprenant un élément tubulaire (56) délimitant intérieurement le passage d'air pour la buse (2), un boîtier externe tubulaire (4) à l'intérieur duquel est reçu l'élément tubulaire (56), et des moyens d'articulation (6, 22) de l'élément tubulaire (56) par rapport au boîtier externe (4) autour d'au moins un axe (A1) pour permettre l'orientation de l'élément tubulaire (56).

12. Véhicule automobile comprenant un système d'aération muni d'une buse selon l'une quelconque des revendications précédentes.

## Claims

1. Ventilation nozzle for a motor vehicle to be positioned at the outlet of a vent pipe opening into the passenger compartment of the vehicle, of the type comprising a passage (57) for the flow of air between the pipe and the passenger compartment, a plurality of cooling ribs (70) mounted in the passage to be movable between a plurality of positions to modify the flow of air in the passage (57), and means (52, 78) for controlling the position of the cooling ribs (70) comprising a control element (44) and a cam (52) and cam followers (78) associated with the cam (52), wherein the cam (52) is mechanically coupled to the control element (44), and each cam follower (78) corresponds to a cooling rib (70) and is mechanically coupled to the corresponding cooling rib (70), **characterised in that** the cam (52) is tubular and has cam grooves (80) extending helically in the cam (52) and the cam followers (78) are received in the cam grooves (80) for displacement therein.

2. Nozzle according to claim 1, in which the or each cooling rib is movable between two end positions and the control means comprise a cam (52) and a cam follower (78) associated singly for the displacement of each cooling rib (70) between the two end positions.

3. Nozzle according to claim 1 or 2, in which the passage extends along an axis (P) and the cam (52) is movably mounted to be rotatable around the axis (P) of the passage (57).

4. Nozzle according to any one of the preceding claims, in which the cam (52) surrounds the passage (57).

5. Nozzle according to any one of the preceding claims, in which each cam follower (78) is in one piece with the corresponding cooling rib (70).

6. Nozzle according to claim 5, in which the or each cooling rib (70) is rotatably movable and comprises a journal (74) for rotatably guiding the cooling rib (70) and an arm (76) extending the journal (74) transversely to the axis of rotation of the cooling rib (70), wherein the arm supports the corresponding cam follower (78) on the side opposite the journal (74).

7. Nozzle according to any one of the preceding claims, comprising at least one slide (54) for sealing the passage that is movable between an open position to allow fluid to flow through the passage and a closed position to prevent the flow of air through the passage, and means (82) for controlling the displacement of the slide (54) that are coupled to the cam (52) so that a determined displacement of the cam (52) causes the displacement of the slide (54) between its closed position and its open position.

8. Nozzle according to claim 7, in which the means (82) for controlling the slide (54) are arranged so that the displacement of the cam (52) on a first course causes the displacement of the slide (54) between its open position and its closed position, and the displacement of the cam (52) on a second course different from the first course causes the displacement of each cooling rib (70).

9. Nozzle according to claim 8, in which the first course and the second course are set apart.

10. Nozzle according to any one of the preceding claims, having a passage extending along an axis (P), wherein each cooling rib (70) is movably mounted to be rotatable around a radial axis of the passage and the cooling ribs (70) are distributed around the axis (P) of the passage so that each cooling rib (70) extends into an angular sector of the passage.

11. Nozzle according to any one of the preceding claims, comprising a tubular element (56) that delimits the air passage for the nozzle (2) on the inside, a tubular outside casing (4), inside which the tubular element (56) is received, and means (6, 22) to articulate the tubular element (56) around at least one axis (A1) in relation to the outside casing (4) to allow the tubular element (56) to pivot.

12. Motor vehicle comprising a ventilation system fitted with a nozzle according to any one of the preceding claims.

## Patentansprüche

1. Belüftungsdüse für Kraftfahrzeuge, die dafür bestimmt ist, am Ausgang einer in den Insassenraum des Fahrzeugs mündenden Lüftungsleitung angeordnet zu sein, der Art mit einem Durchgang (57) zum Strömen der Luft zwischen der Leitung und dem Insassenraum, einer Vielzahl von Flügeln (70), die in dem Durchgang beweglich zwischen einer Vielzahl von Positionen zur Veränderung des Strömens der Luft in dem Durchgang (57) angebracht ist, und Steuervorrichtungen (52, 78) für die Position der Flügel (70), welche ein Steuerorgan (44) und einen Nocken (52) und mit dem Nocken (52) verbundene Nockenfolger (78) aufweisen, wobei der Nocken (52) mit dem Steuerorgan (44) mechanisch gekoppelt ist, wobei jeder Nockenfolger (78) einem Flügel (70) entspricht und mit dem entsprechenden Flügel (70) mechanisch gekoppelt ist, **dadurch gekennzeichnet, dass** der Nocken (52) röhrenförmig ausgebildet ist und Nockenrillen (80) aufweist, die sich schraubenförmig in dem Nocken (52) erstrecken, wobei die Nockenfolger (78) in den Nockenrillen (80) aufgenommen sind, um sich in diesen zu bewegen.

2. Düse gemäß Anspruch 1, wobei der oder jeder Flügel zwischen zwei extremen Positionen beweglich ist, und wobei die Steuervorrichtungen einen Nocken (52) und einen Nockenfolger (78) aufweisen, die einzeln verbunden sind für die Bewegung jedes Flügels (70) zwischen den beiden extremen Positionen.

3. Düse gemäß Anspruch 1 oder 2, wobei sich der Durchgang entlang einer Achse (P) erstreckt und der Nocken (52) in Drehung um die Achse (P) des Durchgangs beweglich angebracht ist.

4. Düse gemäß irgendeinem der vorherigen Ansprüche, wobei der Nocken (52) den Durchgang (57) umgibt.

5. Düse gemäß irgendeinem der vorherigen Ansprüche, wobei jeder Nockenfolger (78) einstückig mit dem entsprechenden Flügel (70) ausgebildet ist.

6. Düse gemäß Anspruch 5, wobei der oder jeder Flügel (70) in Drehung beweglich ausgebildet ist und einen Drehführungszapfen (74) für den Flügel (70) und einen den Zapfen (74) quer zu der Drehachse des Flügels (70) verlängernden Arm (76) aufweist, wobei der Arm auf der dem Zapfen (74) gegenüber liegenden Seite den entsprechenden Nockenfolger (78) trägt.

7. Düse gemäß irgendeinem der vorherigen Ansprüche, mit zumindest einer Verschlußklappe (54) zum Verschließen des Durchgangs, welche beweglich ist zwischen einer offenen Position, die das Strömen von Fluid durch den Durchgang ermöglicht, und einer geschlossenen Position, die das Strömen von Luft durch den Durchgang unterbindet, und Steuervorrichtungen (82) für die Bewegung der Verschlußklappe (54), die mit dem Nocken (52) derart gekoppelt sind, dass eine bestimmte Bewegung des Nockens (52) die Verschiebung der Verschlußklappe (54) zwischen ihrer geschlossenen Position und ihrer offenen Position bewirkt.

8. Düse gemäß Anspruch 7, wobei die Steuervorrichtungen (82) für die Verschlußklappe (54) derart eingerichtet sind, dass die Bewegung des Nockens (52) auf einer ersten Bahn die Bewegung der Verschlußklappe (54) zwischen ihrer offenen Position und ihrer geschlossenen Position bewirkt und die Bewegung des Nockens (52) auf einer zweiten, sich von der ersten Bahn unterscheidenden Bahn die Bewegung jedes Flügels (70) bewirkt.

9. Düse gemäß Anspruch 8, wobei die erste Bahn und die zweite Bahn voneinander getrennt ausgebildet sind.

10. Düse gemäß irgendeinem der vorherigen Ansprüche, welche einen Durchgang aufweist, der sich entlang einer Achse (P) erstreckt, wobei jeder Flügel (70) in Drehung beweglich um eine radiale Achse des Durchgangs angebracht ist, wobei die Flügel (70) um die Achse (P) des Durchgangs derart verteilt sind, dass sich jeder Flügel (70) in einem Winkelabschnitt des Durchgangs erstreckt.

11. Düse gemäß irgendeinem der vorherigen Ansprüche mit einem röhrenförmigen Element (56), welches im Inneren den Luftdurchgang für die Düse (2) begrenzt, einem röhrenförmigen Außengehäuse (4), in dessen Inneren das röhrenförmige Element (56) aufgenommen ist, und Vorrichtungen (6, 22) zur Schwenkbarkeit des röhrenförmigen Elementes (56) bezüglich des Außengehäuses (4) um zumindest eine Achse (A1), um die Ausrichtung des röhrenförmigen Elementes (56) zu ermöglichen.

12. Kraftfahrzeug mit einem Lüftungssystem, das mit einer Düse gemäß irgendeinem der vorherigen Ansprüche versehen ist.
